# EUROPEAN PATENT SPECIFICATION

(11) **EP 3 677 654 B1**
(45) Date of publication and mention of the grant of the patent: **07.10.2026**
(21) Application number: 18852170.2
(22) Date of filing: 28.08.2018
(51) Int. Cl.: C09D 183/06, B32B 27/00, B32B 27/34, C09D 5/02, C09D 7/47, C09D 7/61, C09D 183/07, C09D 183/04

(54) **PAINT COMPOSITION FOR FORMING HARDCOAT LAYER, AND OPTICAL COMPONENT**
FARBZUSAMMENSETZUNG ZUR HERSTELLUNG EINER HARTSCHICHT UND OPTISCHE KOMPONENTE
COMPOSITION DE PEINTURE POUR FORMER UNE COUCHE DE REVÊTEMENT DUR ET COMPOSANT OPTIQUE

(30) Priority: 31.08.2017 JP 2017167410
(43) Date of publication of application: 08.07.2020
(73) Proprietor: JGC Catalysts and Chemicals Ltd., Kawasaki-shi, Kanagawa 212-0013 (JP)
(72) Inventor: SAKAI, Masatoshi, Kitakyushu-shi Fukuoka 808-0027 (JP); SHIMIZU, Takehiro, Kitakyushu-shi Fukuoka 808-0027 (JP)
(74) Representative: Dehns
(86) International application number: PCT/JP2018/031778
(87) International publication number: WO 2019/044838

(56) References cited:
- WO-A1-2007/046357
- WO-A1-2011/102502
- WO-A1-2015/163465
- WO-A1-2016/088901
- CN-A- 101 955 728
- JP-A- 2008 081 710
- JP-A- 2009 197 078
- JP-A- 2012 137 636
- JP-A- 2015 151 489
- JP-A- 2015 193 757
- JP-A- 2016 079 286
- JP-A- 2016 115 927
- JP-A- 2016 190 769
- JP-A- H10 332 902
- JP-A- S62 204 201
- KR-A- 20110 084 688
- US-B2- 7 978 409

## Description

### Technical Field

The present invention relates to a coating composition for forming a hardcoat layer on a plastic substrate, and an optical component, such as an optical lens, having a hardcoat layer obtained by applying the coating composition.

### Background Art

Plastic substrates have been recently increasingly used for materials of optical lenses, in particular, lenses for eyewear, instead of inorganic glass substrates. This is because not only plastic substrates have excellent properties in terms of lightness, impact resistance, processability, dyeing property, and the like, but also materials of the substrates have been progressively improved and developed for second-generation plastic lenses, and have been more lightened, increased in refractive index, and the like. Such plastic substrates, however, have the disadvantage of being easily scratched as compared with inorganic glass substrates.

Silicone curable coating films, namely, hardcoat layers are usually provided on surfaces of optical lenses using plastic substrates in order that the above disadvantage is avoided. Furthermore, such a hardcoat layer, in the case of use of a plastic lens substrate having a high refractive index, is allowed to contain metal oxide fine particles or silica-based fine particles in order that light interference (which appears as an interference fringes) caused between the lens and the hardcoat layer is avoided and that scratch resistance of a coating film is enhanced (for example, Patent Literatures 1 and 2).

### Citation List

### Patent Literatures

Patent Literature: 1: International Publication No. WO 2007/046357
Patent Literature: 2: Japanese Patent Laid-Open No. 2009-197078

### Summary of Invention

### Technical Problem

While substrates made of polycarbonate resins, which have high transparency, have been conventionally mainly used as plastic substrates, substrates provided with functionalities have been increasingly required recently. The present inventors have then tried to produce an optical component including a substrate and a hardcoat layer by use of a substrate made of a polyamide resin, as a plastic substrate. It, however, has been found that a hardcoat layer formed from a conventional coating composition for forming a hardcoat layer has low adhesiveness to a polyamide resin substrate. Such low adhesiveness is considered to be caused by low resistance of such a polyamide substrate to an alcohol contained in such a coating composition for forming a hardcoat layer, and thus the present inventors have then tried to solve the problem by increasing the proportion of water in a solvent of the composition. It, however, has been found that a composition having high proportion of water is low in wettability to a polyamide resin substrate and thus may cause a poor appearance of a hardcoat layer.

An object of the present invention is to solve the above-mentioned problem caused due to use of a polyamide resin substrate in production of an optical component with a hardcoat layer. That is, an object of the present invention is to provide a coating composition which is highly wettable to a polyamide resin substrate and which can form a hardcoat layer having high adhesiveness to a polyamide resin substrate and favorable appearance on a polyamide resin substrate, and an optical article including a hardcoat layer having high adhesiveness to a polyamide resin substrate and favorable appearance. An additional object of the present invention is to provide a coating composition which is also highly wettable to a resin substrate high in resistance to alcohol and which can form a hardcoat layer having high adhesiveness to a resin substrate and favorable appearance on the resin substrate, and an optical component including a hardcoat layer having high adhesiveness to a resin substrate and favorable appearance.

### Solution to Problem

The present invention relates to, for example, the following [1] to [10].
[1] A coating composition for forming a hardcoat layer for a plastic substrate,
   the coating composition comprising:
      (A) at least one component selected from the group consisting of an organosilicon compound represented by the following general formula (I), a hydrolysate thereof, and a partial condensate of the hydrolysate:

         R¹R²ₐSi(OR³)₃₋ₐ ... (I)

         wherein R¹ represents an organic group having a vinyl group, an epoxy group or a methacryloxy group,
         R² represents a hydrocarbon group having 1 to 4 carbon atoms, R³ represents a hydrocarbon group having 1 to 8 carbon atoms, an alkoxyalkyl group having 8 or less carbon atoms, or an acyl group having 8 or less carbon atoms, and
         a represents 0 or 1;
      (B) silica-based fine particles;
      (C) a curing agent comprising a cyanamide derivative compound and at least one selected from the group consisting of a polycarboxylic acid and a polycarboxylic anhydride;
      (D) a leveling agent; and
      (E) a solvent comprising water and an organic solvent; and
   the coating composition satisfying the following requirement (1) or (2):
      requirement (1):
         a content of the water is 10 to 30% by mass, and
         the leveling agent (D) is a leveling agent (D1) having an HLB of 5 to 9;
      requirement (2):
         a content of the water is 31 to 50% by mass, and
         the leveling agent (D) is a leveling agent (D2) which is a leveling agent having an HLB of 13.0 to 16.0 and which comprises a leveling agent (d21) having an HLB of 5.0 to 9.0 and a leveling agent (d22) having an HLB of 13.0 to 16.0.
[2] The coating composition for forming a hardcoat layer for a plastic substrate according to [1], wherein the coating composition satisfies the requirement (1).
[3] The coating composition for forming a hardcoat layer for a plastic substrate according to [1], wherein the coating composition satisfies the requirement (2).
[4] The coating composition for forming a hardcoat layer for a plastic substrate according to any of [1] to [3], having a surface tension of 23 mN/m or less.
[5] The coating composition for forming a hardcoat layer for a plastic substrate according to any of [1] to [4], wherein the plastic substrate is a polyamide resin substrate.
[6] An optical component comprising a plastic substrate and a hardcoat layer comprising a cured product of the coating composition according to any of [1] to [5] provided on the substrate.
[7] The optical component according to [6], further comprising an antireflective film on a surface of the hardcoat layer opposite to the plastic substrate side.
[8] The optical component according to [6] or [7], further comprising a primer layer comprising a polyurethane resin as a main component between the plastic substrate and the hardcoat layer.
[9] The optical component according to [6] or [7], comprising no primer layer between the plastic substrate and the hardcoat layer.
[10] The optical component according to any of [6] to [9], wherein the resin substrate is a polyamide resin substrate.

### Advantageous Effects of Invention

The coating composition for forming a hardcoat layer according to the present invention is highly wettable to a plastic substrate (for example, a polyamide resin substrate, or a resin substrate having high resistance to alcohol), and can form a hardcoat layer having high adhesiveness to the plastic substrate and favorable appearance on the plastic substrate.

The hardcoat layer, which the optical component according to the present invention has, has high adhesiveness to a plastic substrate (for example, a resin substrate with high resistance to alcohol or a polyamide resin substrate) and favorable appearance.

### Brief Description of Drawing

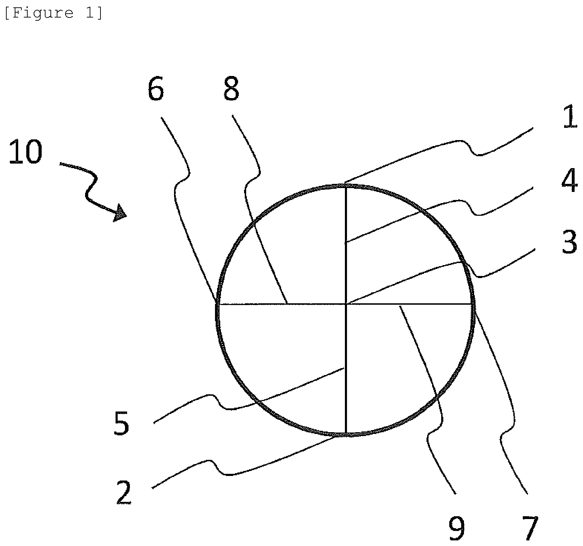

[Figure 1] Figure 1 is a view for describing measurement of the variation in thickness in Examples and the like.

### Description of Embodiments

Hereinafter, the coating composition for forming a hardcoat layer, the hardcoat layer and the optical component according to the present invention will be specifically described.

### [Coating composition for forming hardcoat layer]

The coating composition for forming a hardcoat layer according to the present invention (hereinafter, also simply referred to as "coating composition".) is a coating composition for forming a hardcoat layer to be provided on a resin substrate, includes (A) a component such as an organosilicon compound (1), (B) silica-based fine particles, (C) a curing agent, (D) a leveling agent, and (E) a solvent including water and an organic solvent, and satisfies the following requirement (1) or requirement (2):
requirement (1):
   the content of the water is 10 to 30% by mass, and
   the leveling agent (D) is a leveling agent (D1) having an HLB of 5 to 9;
requirement (2):
   the content of the water is 31 to 50% by mass, and
   the leveling agent (D) is a leveling agent (D2) which is a leveling agent having an HLB of 13.0 to 16.0 and which includes a leveling agent component (d21) having an HLB of 5.0 to 9.0 and a leveling agent component (d22) having an HLB of 13.0 to 16.0.

Hereinafter, the coating composition of the present invention, which satisfies the requirement (1), is also designated as "coating composition (1)", and the coating composition of the present invention, which satisfies the requirement (2), is also designated as "coating composition (2)".

Each component is described in detail hereinafter.

### (A) Component such as organosilicon compound (1);

The coating composition according to the present invention contains at least one component (hereinafter, also referred to as "component (A)".) selected from the group consisting of an organosilicon compound represented by the following general formula (I) (hereinafter, also referred to as "organosilicon compound (1)".), a hydrolysate thereof, and a partial condensate of the hydrolysate.

R¹R²ₐSi(OR³)₃₋ₐ ... (I)

In formula (I), R¹ represents an organic group having a vinyl group, an epoxy group or a methacryloxy group, preferably represents an organic group having an epoxy group. The number of carbon atoms in the organic group is preferably 8 or less, further preferably 6 or less.

R² represents a hydrocarbon group having 1 to 4 carbon atoms.

R³ represents a hydrocarbon group having 1 to 8 carbon atoms, an alkoxyalkyl group having 8 or less carbon atoms, or an acyl group having 8 or less carbon atoms.

a represents 0 or 1.

The organosilicon compound (1) is typically an alkoxysilane compound, and specific examples thereof include vinyltrimethoxysilane, γ-methacryloxypropyltrimethoxysilane, α-glycidoxymethyltrimethoxysilane, α-glycidoxyethyltrimethoxysilane, β-glycidoxyethyltrimethoxysilane, γ-glycidoxypropyltrimethoxysilane, γ-glycidoxypropyltriethoxysilane, γ-glycidoxypropylmethyldimethoxysilane, γ-glycidoxypropylmethyldiethoxysilane, β-(3,4-epoxycyclohexyl)-ethyltrimethoxysilane and β-(3,4-epoxycyclohexyl)-ethyltriethoxysilane. In particular, γ-glycidoxypropyltrimethoxysilane, γ-glycidoxypropylmethyldiethoxysilane, β-(3,4-epoxycyclohexyl)-ethyltrimethoxysilane, and the like are preferable. Such compounds may be used singly or in combinations of two or more kinds thereof.

The hydrolysate of the organosilicon compound (1), and the partial condensate of the hydrolysate are, respectively, any hydrolysate obtained by subjecting the organosilicon compound (1) to partial hydrolysis or hydrolysis in the absence of a solvent or in a polar organic solvent such as an alcohol (for example, methanol) in the presence of an acid and water (for example, hydrochloric acid), and any partial condensate obtained by further subjecting such any hydrolysate to partial condensation. Such an organic solvent and water may be fully or partially used as a solvent (E) described below, as it is, in preparation of the coating composition according to the present invention.

When silica-based fine particles (B) are blended as silica sol in preparation of the coating composition according to the present invention, the hydrolysis and/or the partial condensation may be performed in a state where the organosilicon compound (1) is mixed with such silica sol, or may be performed before such mixing.

### (B) Silica-based fine particles;

The coating composition according to the present invention contains silica-based fine particles (B) (hereinafter, also referred to as "component (B)".).

The average particle size of the silica-based fine particles (B) is in the range from 3 to 60 nm, preferably in the range from 5 to 50 nm, as measured by a dynamic light scattering method under conditions adopted in Examples described below or under any conditions equivalent thereto. In a case where the average particle size of the silica-based fine particles (B) is the lower limit or more, a cured film (hardcoat layer) formed from the coating composition of the present invention on a polyamide resin substrate has excellent scratch resistance, and the coating composition according to the present invention has excellent storage stability. In a case where the average particle size is the upper limit or less, a hardcoat layer formed from the coating composition according to the present invention has excellent transparency and high smoothness, and thus has excellent scratch resistance.

The silica-based fine particles (B) may be blended as sol (hereinafter, also referred to as "silica sol".) in preparation of the coating composition according to the present invention. A preferable mode of the silica sol is, for example, silica sol having a pH in the range from 2.0 to 4.0, preferably in the range from 2.2 to 3.7, as measured at a temperature of 25°C, and having a zeta potential in the range from -10 to -30 mV, preferably in the range from -15 to -25 mV in such a pH range. In more detail, preferably, the zeta potential at a pH of 2.0 is in the range from -10 to -20 mV, the zeta potential at a pH of 3.0 is in the range from - 15 to -25 mV, and the zeta potential at a pH of 4.0 is in the range from -20 to -30 mV.

In a case where the pH of the silica sol is the lower limit or more, the silica sol has excellent dispersion stability, the silica sol can be used to prepare a coating composition having a long pot life, and a hardcoat layer having high scratch resistance can be obtained from such a coating composition. In a case where the pH is the upper limit or less, a hardcoat layer having excellent scratch resistance can be formed.

In a case where the zeta potential of the sol is the upper limit or less, the sol can be used to prepare a coating composition having a long pot life. In a case where the zeta potential is the lower limit or more, a hardcoat layer having excellent scratch resistance can be formed.

Such sol containing the silica-based fine particles (B) can be produced according to a conventionally known method described in, for example, Japanese Patent No. H04-055126 or Japanese Patent Laid-Open No. 2009-197078.

The silica-based fine particles (B) preferably includes not only a silicon component, but also one or more metal components selected from the group consisting of aluminum, zirconium, titanium, antimony, tin, zinc, nickel, barium, magnesium and vanadium. The metal component is particularly preferably aluminum.

The ratio of the metal component to the silicon component contained in the silica-based fine particles (B) is preferably 0.0001 to 0.010, as represented by the molar ratio (MOₓ/SiO₂) in a case where the metal component is represented by MOₓ and the silicon component is represented by SiO₂.

In a case where the molar ratio is 0.0001 or more, a negative potential (zeta potential) is sufficiently obtained in an acidic region and thus the silica sol has excellent stability. In a case where the molar ratio is 0.010 or less, elution of the metal component being a cation component in an acidic region is suppressed and thus the silica sol has excellent stability.

Furthermore, the metal component is preferably present in the form of a composite oxide combined with the silicon component. One example of the composite oxide is as follows, as schematically represented by a chemical formula.

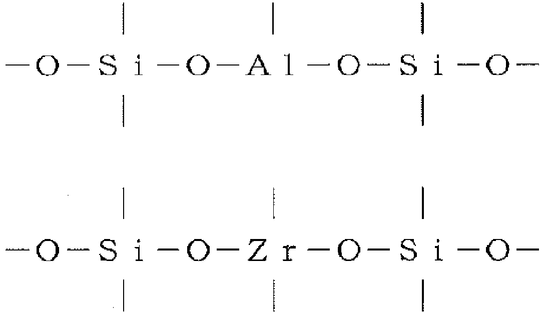

The solid content concentration of the silica sol, namely, the content of the silica-based fine particles (B) in the silica sol is preferably 10 to 40% by mass, more preferably 20 to 30% by mass. In a case where the content is the lower limit or more, a hardcoat layer having a high thickness is easily obtained, and in a case where the content is the upper limit or less, the silica sol has excellent storage stability.

The amount of an alkali metal component such as sodium and potassium contained as impurities in the silica sol is 0.20% by mass or less, preferably 0.10% by mass or less based on oxide conversion. The alkali metal component may also be sometimes contained in the silica-based fine particles (B). In a case where the content of the alkali metal component is the upper limit or less, fine particles or the like which are contained in a mixed liquid in mixing of a solution (acidic solution) with the silica sol can be inhibited from being aggregated and thus causing the sol to be deteriorated in stability, wherein the solution (acidic solution) include, for example, the hydrolysate of the organosilicon compound (1), obtained by hydrolysis in the presence of an acid catalyst, and/or the partial condensate thereof.

The silica sol may be a aqueous dispersion of the silica-based fine particles (B), or may be a dispersion obtained by solvent replacement of a part of or all water contained in the aqueous dispersion with an alcohol such as methanol, ethanol, butanol, propanol or isopropyl alcohol or an ether such as ethylene glycol monomethyl ether, propylene glycol monomethyl ether or propylene glycol monoethyl ether. Such an organic solvent and water may also be fully or partially used as a solvent (E) described below, as it is, in preparation of the coating composition according to the present invention.

The component (B) is preferably contained in the coating composition according to the present invention at a rate of 10 to 70% by mass, further preferably 15 to 60% by mass based on 100% by mass of the solid content (any components except for solvents, provided that all hydrolyzable groups in the component (A) and an optional component (F) described below are assumed to be consumed in a condensation reaction) of the coating composition. The component (A) may be blended in an amount of 100 to 1000 parts by volume based on 100 parts by volume of the silica-based fine particles (B), in preparing the coating composition according to the present invention.

In a case where the content (solid content rate) is the lower limit or more, a cured coating film (hardcoat layer) having excellent scratch resistance can be formed on a plastic lens substrate made of a polyamide resin, by use of the coating composition of the present invention. In a case where the content (solid content rate) is the upper limit or less, a cured coating film (hardcoat layer) can be formed which has excellent adhesiveness to a lens substrate made of a polyamide resin and excellent crack resistance (in particular, in curing).

### (C) Curing agent;

The coating composition according to the present invention contains at least one selected from the group consisting of polycarboxylic acid and polycarboxylic anhydride (hereinafter, also referred to as "polycarboxylic acid compound".) and contains a cyanamide derivative compound as a curing agent (C) (hereinafter, also referred to as "component (C)".).

Examples of the polycarboxylic acid compound include adipic acid, itaconic acid, malic acid, trimellitic anhydride, pyromellitic anhydride and hexahydrophthalic anhydride. Such compounds may be used singly or in combinations of two or more kinds thereof.

Examples of the cyanamide derivative compound include guanidine, a guanidine organic acid, a guanidine inorganic acid salt, alkylguanidine, aminoguanidine and dicyandiamide, and such compounds may be used singly or in combinations of two or more kinds thereof.

Itaconic acid and dicyandiamide are preferably used in combination, as the curing agent (C).

The ratio between the polycarboxylic acid compound and the cyanamide derivative compound is preferably 1:0.15 to 0.80, as represented by the mass ratio (polycarboxylic acid compound: cyanamide derivative compound). In a case where the ratio is 0.15 or more, a hardcoat layer formed from the coating composition is enhanced in scratch properties and adhesiveness. In a case where the ratio is 0.80 or less, a poor appearance of a hardcoat layer can be prevented from occurring, wherein the poor appearance is due to incomplete dissolution of the cyanamide derivative compound in the coating composition.

The content of the curing agent (C) in the coating composition according to the present invention is preferably 2 to 40 parts by mass, more preferably 3 to 35 parts by mass based on 100 parts by mass in total of the component (A) and an optional component (F) described below (provided that all hydrolyzable groups in the components (A) and (F) are assumed to be consumed in a condensation reaction.). In a case where the content is the lower limit or more, a hardcoat layer having sufficient hardness can be obtained. In a case where the content is the upper limit or less, the coating composition is not reduced in pot life and has excellent storage stability.

### (D) Leveling agent;

The coating composition according to the present invention contains a leveling agent (D) (hereinafter, also referred to as "component (D)".).

The content of the leveling agent (D) in the coating composition according to the present invention (in a case where the leveling agent is diluted with a solvent, the content means one from which the amount of the solvent is excluded.) is preferably 0.01 to 1 part by mass based on 100 parts by mass in total of the component (A) and optional component(s) (F) described below (provided that all hydrolyzable groups in the components (A) and (F) are assumed to be consumed in a condensation reaction.).

### (Case of coating composition (1))

The coating composition (1) contains the leveling agent (D1) as the leveling agent (D). The HLB (Hydrophilic-Lipophilic Balance) of the leveling agent (D1), as calculated according to the Griffin method, is 5 to 9, preferably 7 to 9.

In a case where the HLB is less than the lower limit, the coating composition has significantly lowered wettability according to an increase in water content in the coating composition, and the appearance of a coating film formed from the coating composition is deteriorated. In a case where the HLB is more than the upper limit, the coating composition has significantly lowered wettability according to a decrease in water content in the coating composition, and the appearance of a coating film formed from the coating composition is deteriorated.

Examples of the leveling agent (D1) include silicone-based surfactants such as polyoxyalkylene dimethylpolysiloxane, and fluorine-based surfactants such as a perfluoroalkylcarboxylic acid salt and a perfluoroalkyl ethylene oxide adduct. In particular, a silicone-based surfactant is preferable. Such agents may be used singly or in combinations of two or more kinds thereof.

Examples of a commercially available product of the leveling agent (D1) include
BY16-036 [HLB = 9], BY16-027 [HLB = 7], SH8400 [HLB = 7], SH3749 [HLB = 7], SH3748 [HLB = 5], SF8410 [HLB = 6], L-7001 [HLB = 7], L-7002 [HLB = 7], Y-7006 [HLB = 7], FZ-2101 [HLB = 9], FZ-2120 [HLB = 6], FZ-2123 [HLB = 8], FZ-2130 [HLB = 7], FZ-2164 [HLB = 8], FZ-2166 [HLB = 5], FZ-2191 [HLB = 5] and L-720 [HLB = 7] and SF8427 [HLB = 9] (all are manufactured by Dow Corning Toray Co., Ltd.);
KF-352 [HLB = 7] and KF-6004 [HLB = 5] (all are manufactured by Shin-Etsu Chemical Co., Ltd.);
TSF4445 [HLB = 7], TSF4446 [HLB = 7], TSF4452 [HLB = 7] and TSF4453 [HLB = 6] (all are manufactured by GE Toshiba Silicones Co., Ltd.); and
FZ-2208 [HLB = 7] (manufactured by Nippon Unicar Co., Ltd.).

### (Case of coating composition (2))

The coating composition (2) contains the leveling agent (D2) as the leveling agent (D). The HLB of the leveling agent (D2), as calculated according to the Griffin method, is 13.0 to 16.0, preferably 13.5 to 15.0.

In a case where the HLB of the leveling agent (D2) is less than the lower limit, the coating composition has lowered wettability, and the appearance of a coating film formed from the coating composition is deteriorated. In a case where the HLB of the leveling agent (D2) is more than the upper limit, the coating composition has lowered wettability, and the appearance of a coating film formed from the coating composition is deteriorated.

The leveling agent (D2) includes a leveling agent component (d21) having an HLB of 5.0 to 9.0, preferably 6.5 to 9.0, and a leveling agent component (d22) having an HLB of 13.0 to 16.0, preferably 13.5 to 15.0.

In contrast, only one leveling agent component having an HLB of 13.0 to 16.0 is used instead of the leveling agent (D2), thereby causing deterioration in wettability of the coating composition and deterioration in the appearance of a coating film formed from the coating composition.

The proportion of the leveling agent component (d21) in the leveling agent (D2) is preferably 0.8 to 5% by mass.

Examples of the leveling agent component (d21) and the leveling agent component (d22) constituting the leveling agent (D2) include silicone-based surfactants such as polyoxyalkylene dimethylpolysiloxane, and fluorine-based surfactants such as a perfluoroalkylcarboxylic acid salt and a perfluoroalkyl ethylene oxide adduct. In particular, a silicone-based surfactant is preferable. The leveling agent component (d21) and the leveling agent component (d22) may be each used singly or in combinations of two or more kinds thereof.

An example of a commercially available product as the leveling agent component (d21) having an HLB of 5.0 to 9.0 can be selected from those listed as examples of a commercially available product of the leveling agent (D1) contained in the coating composition (1).

Examples of a commercially available product of the leveling agent component (d22) having an HLB of 13.0 to 16.0 include
SH-3746 [HLB = 14.0] and SH-3771C [HLB = 13.0] (all are manufactured by Dow Corning Toray Co., Ltd.); and
KF-6011 [HLB = 14.5], KF-6011P [HLB = 14.5] and KF-6043 [HLB = 14.5] (all are manufactured by Shin-Etsu Chemical Co., Ltd.) .

In a case where the leveling agent (D) is constituted from a plurality of leveling agents (also referred to as "leveling agent component" in the present invention.), the HLB value of the leveling agent (D) is represented as the sum of the products of the weight fractions and the HLB values of such respective leveling agent components.

### (E) Solvent;

The coating composition according to the present invention contains a solvent (E) (hereinafter, also referred to as "component (E)".). The solvent (E) includes water and an organic solvent. The organic solvent is preferably any solvent having a boiling point of 125°C or less from the viewpoint of limitation in formation of a coating film.

Examples of the organic solvent include alcohols such as methanol, ethanol, propanol, 2-propanol (IPA), butanol, diacetone alcohol, furfuryl alcohol, tetrahydrofurfuryl alcohol, ethylene glycol, hexylene glycol and isopropyl glycol;
esters such as methyl acetate, ethyl acetate and butyl acetate; and
ethers such as diethyl ether, ethylene glycol monomethyl ether, ethylene glycol monoethyl ether, ethylene glycol monobutyl ether, ethylene glycol isopropyl ether, diethylene glycol monomethyl ether, diethylene glycol monoethyl ether, propylene glycol monomethyl ether and propylene glycol monoethyl ether. Such solvents may be used singly or in combinations of two or more kinds thereof. In particular, methanol, ethyl acetate, and propylene glycol monomethyl ether are preferable.

The coating composition according to the present invention contains the solvent (E), and thus has high fluidity and can be easily applied on a plastic substrate such as a polyamide resin substrate.

The content of the solvent (E) in the coating composition according to the present invention is preferably 50 to 90% by mass, further preferably 60 to 80% by mass under the assumption that the amount of the coating composition according to the present invention is 100% by mass.

Furthermore, the content of water is described in detail with respect to respective cases where the coating composition according to the present invention is the coating composition (1) and where the coating composition is the coating composition (2).

### (Case of coating composition (1))

The content of water in the coating composition (1) according to the present invention is 10 to 30% by mass, preferably 12 to 30% by mass under the assumption that the amount of the coating composition (1) according to the present invention is 100% by mass. In a case where the content of water is less than 10% by mass, the solvent is required to have an increased proportion of an organic solvent such as an alcohol in order to enhance fluidity of the coating composition, and coating of a polyamide resin substrate with a coating composition having high proportion of an organic solvent such as an alcohol causes the polyamide resin substrate to be damaged and causes adhesiveness between a formed hardcoat layer and such a polyamide substrate to be deteriorated. In a case where the content of water is more than 30% by mass, not only the coating composition is excessively increased in surface tension, thereby causing the coating composition to have deteriorated wettability to a plastic substrate such as a polyamide resin substrate, but also a relatively high boiling point of water decreases the rate of drying of the coating composition, thereby easily causing a poor appearance of a formed coating film.

### (Case of coating composition (2))

The content of water in the coating composition (2) according to the present invention is 31 to 50% by mass, preferably 33 to 48% by mass under the assumption that the amount of the coating composition (2) according to the present invention is 100% by mass. In a case where the content of water is less than 31% by mass, the solvent is required to have an increased proportion of an organic solvent such as an alcohol in order to enhance fluidity of the coating composition, and coating of a polyamide resin substrate with a coating composition having high proportion of an organic solvent such as an alcohol causes the polyamide resin substrate to be damaged and causes adhesiveness between a formed hardcoat layer and such a polyamide substrate to be deteriorated. In a case where the content of water is more than 50% by mass, a poor appearance is easily caused on a formed coating film since the excessive increase in surface tension of the coating composition deteriorates wettability of the coating composition to a plastic substrate such as a polyamide resin substrate, and since a relatively high boiling point of water decreases the rate of drying of the coating composition.

### (Optional component(s))

The coating composition according to the present invention may further contain optional component(s) such as an organosilicon compound (hereinafter, also referred to as "component (F)".) other than the organosilicon compound (1), a benzophenone-based ultraviolet absorber, a benzotriazole-based ultraviolet absorber, and a hindered amine-based light stabilizer.

Examples of the component (F) include at least one component selected from the group consisting of an alkoxysilane compound (2) other than the organosilicon compound (1), a hydrolysate thereof and a partial condensate of the hydrolysate. Specific examples of the alkoxysilane compound (2) include methyltrimethoxysilane, γ-aminopropyltrimethoxysilane, γ-aminopropyltriethoxysilane, N-β(aminoethyl)-γ-aminopropylmethyldimethoxysilane, N-β(aminoethyl)-γ-aminopropylmethyldiethoxysilane, tetramethoxysilane and tetraethoxysilane.

The content of the solvent (E) in the coating composition according to the present invention can be appropriately adjusted as long as the effects of the present invention and curing properties of the coating composition are not impaired.

### (Preparation of coating composition)

One example of a method for preparing the coating composition according to the present invention is shown as follows, but the present invention is not limited to such a method.

The coating composition according to the present invention can be prepared by mixing the above-mentioned component (A), component (B), component (C), component (D) and component (E), and, if necessary, the above-mentioned optional component(s), according to an ordinary method.

For example, the coating composition according to the present invention may be prepared by hydrolyzing the organosilicon compound (1) and the alkoxysilane compound (2) in an organic solvent such as methanol in the presence of an acid and water, and mixing the resulting hydrolysis liquid, the silica sol containing the component (B), the component (C), the component (D), additionally, if necessary, the solvent (E), and, if necessary, the above-mentioned optional component(s).

The coating composition according to the present invention is highly wettable to a plastic substrate such as a polyamide resin substrate, the surface tension thereof, as measured according to a method adopted in Examples described below or a comparable method therewith, is preferably 23 mN/m or less, and the lower limit may be, for example, 7 mN/m. The surface tension can be lowered by, for example, decreasing the content of water in the coating composition, increasing the amount of the leveling agent, or using an organic solvent with low surface tension as the organic solvent.

The coating composition according to the present invention is used for forming a hardcoat layer mainly on a polyamide resin substrate. The coating composition according to the present invention, however, can also be used for forming a hardcoat layer on a substrate having alcohol resistance, for example, various plastic lens substrates produced by processing with a polystyrene resin, an aliphatic allyl resin, an aromatic allyl resin, a polycarbonate resin, a polythiourethane resin, or a polythioepoxy resin, or a plastic substrate where a primer layer is provided.

### [Hardcoat layer and optical component]

A hardcoat layer according to the present invention includes a cured product of the composition for forming a hardcoat layer according to the present invention.

The optical component according to the present invention includes a plastic substrate such as a polyamide resin substrate, and the hardcoat layer according to the present invention, provided on the substrate.

The hardcoat layer or the optical component can be produced by applying the coating composition according to the present invention on one surface or both surfaces of a plastic substrate such as a polyamide resin substrate, and then curing the coating composition.

The substrate used here is preferably any substrate having a refractive index of 1.49 to 1.65. The refractive index can be adjusted by a method such as change in type of plastic such as a polyamide resin or mixing of other resin with plastic such as a polyamide resin. Examples of any plastic substrate other than a polyamide resin substrate include a substrate having alcohol resistance, for example, various plastic lens substrates produced by processing with a polystyrene resin, an aliphatic allyl resin, an aromatic allyl resin, a polycarbonate resin, a polythiourethane resin, and a polythioepoxy resin, and a plastic substrate where a primer layer is provided.

The coating composition according to the present invention is often used for producing an optical lens provided with the hardcoat layer on a lens substrate made of plastic such as a polyamide resin, among the optical components, and thus such an optical lens will be described hereinafter.

In a case where the coating composition according to the present invention is applied on one surface of a plastic substrate such as a polyamide resin substrate, a known coating method such as a dipping method or a spin coating method can be used.

While a poor appearance of a hardcoat layer, as described above, is remarkably observed particularly in the case of coating with a coating composition for forming a hardcoat layer by a dipping method, when the coating composition for forming a hardcoat layer according to the present invention is used as a coating composition for forming a hardcoat layer, a hardcoat layer with favorable appearance can be formed even in the case of coating by a dipping method.

A coating film made of the coating composition according to the present invention, formed on a plastic substrate such as a polyamide resin substrate, is thermally cured, thereby forming a hardcoat layer. Such thermal curing is performed by a heat treatment at 80 to 130°C for 0.5 to 5 hours. A cured coating film, thus obtained, namely, a hardcoat layer preferably has a thickness of 1.0 to 5.0 µm, more preferably 1.5 to 4.0 µm.

The optical component (for example, optical lens) according to the present invention may further include or may not include an antireflective film on a surface of the hardcoat layer, the surface being opposite to the plastic substrate, depending on the intended use.

A known method can be used as a method for forming the antireflective film. Examples of a representative method include a dry method involving forming a film on the hardcoat layer by use of a metal oxide such as SiO₂, SiO, Ta₂O₅, SnO₂, WO₃, TiO₂, ZrO₂ or Al₂O₃, a metal fluoride such as MgF₂, or other inorganic substance according to a vapor deposition method, a sputtering method, an ion plating method or the like, and a wet method involving coating the hardcoat layer with a coating composition where an alkoxysilane compound and/or a polyfunctionalized acrylate compound is mixed with hollow silica sol or with a fluorine coating composition, according to a dipping method, a spin coating method or the like, and then subjecting the resultant to a heating treatment to thereby form a film. The antireflective film may have one layer, or, if necessary, a plurality of layers.

The optical component (for example, optical lens) according to the present invention may further include or may not include a primer layer between the plastic substrate and the hardcoat layer, depending on the intended use. Examples of the primer layer include a primer layer containing a polyurethane resin as a main component. The primer layer can be formed by coating the plastic substrate with a composition for forming a primer layer, for example, a composition containing a thermosetting polyurethane resin formed from block-type polyisocyanate and polyol or an aqueous emulsion type polyurethane resin.

### Examples

Hereinafter, the present invention will be more specifically described with reference to Examples, but the present invention is not limited to these Examples at all.

### [Measurement methods and evaluation test methods]

Measurement methods and evaluation test methods used in Examples and the like are as follows.

### (1) Average particle size of silica-based fine particles (B)

A cylindrical stainless cell having a length of 3 cm, a width of 2 cm and a height of 2 cm equipped with a transmissive window was loaded with 7.0 g of a sample of silica sol (having a solid content concentration of 20% by mass), and a particle size distribution was measured by use of an ultrafine particle size analyzer (Model 9340-UPA150 manufactured by Honeywell International Inc.) according to a dynamic light scattering method and thus the average particle size was calculated.

### (2) pH of silica sol

A cell loaded with 50 ml of a sample of silica sol (having a solid content concentration of 20% by mass) was prepared, and a glass electrode of a pH meter (F22 manufactured by Horiba Ltd.) completely calibrated by respective standard liquids having pHs of 4, 7 and 9 was inserted to measure the pH in a constant-temperature bath at 25°C.

### (3) Zeta potential of silica sol

A cell loaded with 15 ml of a sample of silica sol where the solid content concentration was adjusted to 0.2% by mass was prepared, and the zeta potential in each pH condition was measured in a constant-temperature section kept at a temperature of 25°C, by use of a zeta potential measurement apparatus (Zetasizer manufactured by Malven Instruments) according to laser Doppler electrophoresis.

### (4) Surface tension of coating composition

20 ml of a coating composition was metered in a glass vessel, and the surface tension at 25°C was measured by use of an automatic surface tensiometer (CBVP-Z manufactured by Kyowa Interface Science, Inc.) according to a plate method.

Plate method: When a gauge head (platinum plate) touches the surface of a paint composition, such a liquid wets the gauge head. The method includes reading the power of drawing the plate into the liquid and thus determining the surface tension.

The shape and the like of the gauge head used are as follows.
Material: platinum-iridium alloy
External dimensions/weight: width 23.85 ± 0.05 mm
   Thickness: 0.15 ± 0.02 mm
   Length: 52 ± 1 mm
   Weight: 950 ± 50 mg

### (5) Adhesiveness of hardcoat layer

One hundred of 1-mm squares were formed by making cut lines at 1-mm intervals by a knife on a hardcoat layer surface of each plastic lens substrate provided with a hardcoat layer, produced in Examples or Comparative Examples, an operation including strongly pushing a pressure-sensitive adhesion tape made of cellophane and then rapidly pulling the tape in a direction of 90 degrees to an in-plane direction of the lens substrate was performed five times in total, and the number of square(s) which did not peeled was counted and evaluated according to the following criteria.
5: Not peeled
4: 1 to 10 squares peeled
3: 11 to 25 squares peeled
2: 26 to 40 squares peeled
1: 41 or more squares peeled

### (6) Scratch properties of hardcoat layer

A hardcoat layer surface of each plastic lens substrate provided with a hardcoat layer, produced in Examples or Comparative Examples, was rubbed by steel wool #0000 manufactured by Bonstar Sales Co., Ltd., in conditions of a load of 700 g × 30 strokes/60 seconds, and the ratio of the area of a portion scratched, to the area of a portion rubbed by the steel wool (hereinafter, referred to as "scratched area".) was confirmed and evaluated according to the following criteria.
5: the scratched area was 0 to 2%
4: the scratched area was 3 to 9%
3: the scratched area was 10 to 29%
2: the scratched area was 30 to 59%
1: the scratched area was 60% or more

### (7) Variation in thickness

The variation in thickness was evaluated by measuring the respective thicknesses of an upper portion and a lower portion of the hardcoat layer (upper portion thickness and lower portion thickness) by a reflectometer (OLYMPUS USPM-RUIII), and determining the difference therebetween. In other words, the variation was evaluated according to the following criteria based on drawing a straight line from an upper portion (upper end) 1 through the center 3 up to a lower portion (lower end) 2 of a lens substrate standing as illustrated in Figure 1, and defining the thickness of the hardcoat layer at the midpoint 4 between the upper portion 1 and the center 3 on the straight line as the upper portion thickness and defining the thickness of the hardcoat layer at the midpoint 5 between the lower portion 2 and the center 3 on the straight line as the lower portion thickness.
Favorable: the difference between the upper portion thickness and the lower portion thickness was within 0.5 µm
Poor: the difference between the upper portion thickness and the lower portion thickness was 0.5 µm or more
The direction up to the upper portion 1 from the lower portion 2 corresponds to a drawing-up direction in dip coating for forming a hardcoat layer.

A straight line from a left portion (left end) 6 through the center 3 up to a right portion (right end) 7 of a lens substrate standing as illustrated in Figure 1 was drawn, and the thickness of the hardcoat layer at the midpoint 8 between the left portion 6 and the center 3, and the thickness of the hardcoat layer at the
midpoint 9 between the right portion 7 and the center 3 on the straight line were also measured.

### [Preparation Example 1]

### (Preparation of silica sol (AS-1))

A sodium silicate solution (#3 sodium silicate manufactured by AGC Si-Tech Co., Ltd.), which contained 24.0% by mass of silicon on SiO₂ conversion and had a molar ratio of SiO₂/Na₂O of 3.0 and a molar ratio of Al₂O₃/SiO₂ of 0.0006 in a case where the content of a silicon component was represented based on SiO₂ conversion, the content of a sodium component was represented based on Na₂O conversion and the content of an aluminum component was represented based on Al₂O₃ conversion, was diluted with ion-exchange water, thereby preparing a diluted sodium silicate solution containing 4.8% by mass of silicon on SiO₂ conversion.

Next, a portion of the diluted sodium silicate solution was allowed to pass through a column filled with a cation exchange resin (Diaion SK-1B manufactured by Mitsubishi Kasei Corporation), thereby providing an acidic silicic acid solution containing 4.6% by mass of a solid content on SiO₂ conversion and having a pH of 2.8.

Next, a 300-L stainless vessel equipped with a reflux device, a stirrer, a heating section and two injection ports was charged with a dilution obtained by diluting 1.3 kg of the sodium silicate solution with 21.6 kg of ion-exchange water, and the dilution was heated to 85°C. While the temperature was kept, 165.9 kg of the acidic silicic acid solution and 5.4 kg of a sodium aluminate solution (aluminum concentration: 1.0% by mass on Al₂O₃ conversion, sodium concentration: 0.77% by mass on Na₂O conversion) were added through one of the injection ports and the other of the injection ports at the same time over 15 hours at certain flow rates, respectively, and kept at a temperature of 85°C for 1 hour after completion of such addition, and thereafter the resultant was concentrated according to a reduced-pressure evaporation method until the concentration of silicon on SiO₂ conversion was 22.0% by mass, thereby providing alkaline silica sol (BS-1).

Next, about 30 L of alkaline silica sol (BS-1) described above was allowed to pass through a flow ion exchange column filled with 6 L of a cation exchange resin (Diaion SK-1BH manufactured by Mitsubishi Kasei Corporation) at a liquid-space velocity of 10 Hr⁻¹ once for dealkalization, and then allowed to pass through a flow ion exchange column filled with an anion exchange resin (Diaion SA10A manufactured by Mitsubishi Kasei Corporation) at a liquid-space velocity of 4.0 Hr⁻¹. 30 L of sol thus obtained was placed in a 50-L stainless vessel equipped with a heater, a temperature regulator and a reflux device and heated to a temperature of 80°C, and the resultant, while was allowed to pass through a flow ion exchange column kept at that temperature and filled with 5 L of a cation exchange resin (Diaion SK-1BH) at a liquid-space velocity of 13.5 Hr⁻¹, was subjected to a secondary dealkalization treatment in a circulating manner for a certain period, thereby providing acidic silica sol (AS-1) containing 20% by mass of silicon on SiO₂ conversion.

### [Preparation Example 2]

### (Preparation of silica sol (AS-2))

Acidic silica sol (AS-1) was subjected to solvent replacement of ion-exchange water as the solvent with methanol and concentrated, thereby providing silica sol dispersed in methanol (AS-2), containing 30% by mass of silicon on SiO₂ conversion.

The average particle size of the silica-based fine particles contained in silica sol (AS-2) was 16.5 nm. The pH and the zeta potential of silica sol (AS-2), as measured at a temperature of 25°C, were 2.2 and -11 mV, respectively.

Silica sol (AS-2) contained 0.04% by mass of sodium based on Na₂O conversion, and had a molar ratio of Na₂O/SiO₂ of 0.0013. The silica-based fine particles in silica sol (AS-2) contained aluminum at a rate so that the molar ratio of Al₂O₃/SiO₂ was 0.0021 in a case where the silica component was represented by SiO₂ and the aluminum component was represented by Al₂O₃.

### [Example 1]

### (Preparation of coating composition H1)

29.7 g of methanol (Hayashi Pure Chemical Ind., Ltd.) was mixed with 198.1 g of γ-glycidoxypropyltrimethoxysilane (A-187 manufactured by Momentive Performance Materials Japan LLC), and 58.4 g of an aqueous 0.01 N hydrochloric acid solution was dropped in the resultant with stirring. The solution was further stirred at room temperature all night and all day, thereby allowing hydrolysis of a silane compound to be performed.

Next, 222.0 g of methanol, 315.4 g of silica sol dispersed in methanol (AS-2) produced in Preparation Example 2, 78.0 g of pure water (Takasugi Pharmaceutical Co., Ltd.), 40.3 g of propylene glycol monomethyl ether (Dow Chemical Japan Ltd.), 33.9 g of itaconic acid (Kishida Chemical Co., Ltd.), 12.3 g of dicyandiamide (Kishida Chemical Co., Ltd.), and 12.0 g of a leveling agent (10% dilution of SH-8400 (HLB = 7, manufactured by Dow Corning Toray Co., Ltd.) with propylene glycol monomethyl ether) were added to the hydrolysis liquid, and stirred at room temperature all night and all day, thereby preparing coating composition (H1).

The blending amount (represented as a relative amount under the assumption that the total amount of each component was 100 parts by mass.) of each component of coating composition (H1) and the evaluation results are shown in Table 1.

### [Examples 2 to 4 and Comparative Examples 1 to 9]

### (Preparation of coating compositions H2 to H4 and C1 to C9)

Each coating composition was prepared by the same method as in Example 1 except that the type, the blending amount and the like of each component were changed as described in Table 1. The blending amount of each component of each coating composition and the evaluation results are shown in Table 1.

The details of leveling agents used were as follows, and each of the leveling agents, diluted with propylene glycol monomethyl ether to 10%, was blended.
FZ-2207: HLB = 3, manufactured by Nippon Unicar Co., Ltd.
SH-8400: HLB = 7, manufactured by Dow Corning Toray Co., Ltd.
SF-8427: HLB = 9, manufactured by Dow Corning Toray Co., Ltd.
L-7604: HLB = 13, manufactured by Dow Corning Toray Co., Ltd.

### [Example 5]

### (Preparation of coating composition H5)

29.7 g of methanol (Hayashi Pure Chemical Ind., Ltd.) was mixed with 198.1 g of γ-glycidoxypropyltrimethoxysilane (A-187 manufactured by Momentive Performance Materials Japan LLC), and 58.4 g of an aqueous 0.01 N hydrochloric acid solution was dropped in the resultant with stirring. The solution was further stirred at room temperature all night and all day, thereby allowing hydrolysis of a silane compound to be performed.

Next, 8.4 g of methanol, 315.4 g of silica sol dispersed in methanol (AS-2) produced in Production Example 2, 291.7 g of pure water (Takasugi Pharmaceutical Co., Ltd.), 40.3 g of propylene glycol monomethyl ether (Dow Chemical Japan Ltd.), 33.9 g of itaconic acid (Kishida Chemical Co., Ltd.), 12.3 g of dicyandiamide (Kishida Chemical Co., Ltd.), 0.5 g of a leveling agent (10% dilution of SH-8400 (HLB = 7, manufactured by Dow Corning Toray Co., Ltd.) with propylene glycol monomethyl ether), and 11.5 g of a leveling agent (10% dilution of KF-6011 (HLB = 14.5, manufactured by Shin-Etsu Silicones) with propylene glycol monomethyl ether) were added to the hydrolysis liquid, and stirred at room temperature all night and all day, thereby preparing coating composition (H5) .

The blending amount (represented as a relative amount under the assumption that the total amount of each component was 100 parts by mass.) of each component of coating composition (H5) and the evaluation results are shown in Table 2.

### [Examples 6 to 10 and Comparative Examples 10 to 15]

### (Preparation of coating compositions H6 to H10 and C10 to C15)

Each coating composition was prepared by the same method as in Example 5 except that the type, the blending amount and the like of each component were changed as described in Table 2. The blending amount of each component of each coating composition and the evaluation results are shown in Table 2.

The details of the leveling agent components used were as follows, and each of the leveling agent components, diluted with propylene glycol monomethyl ether to 10%, was blended.
SH-8400: HLB = 7, manufactured by Dow Corning Toray Co., Ltd.
KF-6011: HLB = 14.5, manufactured by Shin-Etsu Silicones

### (Formation of hardcoat layer)

A plastic lens substrate (diameter: 7 cm) was soaked in an aqueous 5% sodium hydroxide solution heated to 40°C, for 3 minutes, and thus etched, thereafter sodium hydroxide attached to the lens was sufficiently washed out with water, and the substrate was dried by hot air at 50°C. A surface of the plastic lens substrate thus pre-treated was coated with a coating composition for forming a hardcoat layer film, thereby forming a coating film. Such coating with the coating composition was performed using a dipping method.

Next, the coating film was dried at 90°C for 10 minutes, and thereafter heat-treated at 110°C for 2 hours, thereby curing the coating film (hardcoat film). The thickness of the hardcoat layer thus formed, after curing, was approximately 3.0 to 3.5 µm.

The evaluation results of adhesiveness of each hardcoat layer are shown in Table 1 and 2.

Not only a plastic lens substrate made of a polyamide resin, but also a plastic lens substrate made of a polycarbonate resin and provided with a primer layer, was coated as the plastic lens substrate with coating composition H4, thereby forming a hardcoat layer. The details of the plastic lens substrates used are as follows.

### <<Plastic lens substrate made of polyamide resin>>

The plastic lens substrate made of a polyamide resin here used was "Glilamid (registered trademark) TR XE 3805" (manufactured by EMS-CHEMIE Ltd.).

### <<Plastic lens substrate made of polycarbonate resin and provided with primer layer>>

A plastic lens substrate made of a polycarbonate resin and provided with a primer layer was produced as follows.

### (Preparation of primer liquid)

A primer liquid was prepared by adding 17.0 g of pure water (Takasugi Pharmaceutical Co., Ltd.), 43.9 g of methanol (Hayashi Pure Chemical Ind., Ltd.), 10.9 g of AS-2, 17.5 g of diacetone alcohol (Kishida Chemical Co., Ltd.), and 0.3 g of (10% dilution of SH-8400 (HLB = 7, manufactured by Dow Corning Toray Co., Ltd.) with propylene glycol monomethyl ether) to 10.4 g of SF-420 (DKS Co., Ltd.), and stirring the resultant at room temperature all night and all day.

### (Formation of primer layer)

A polycarbonate substrate (having a diameter of 6 cm, manufactured by Asahi Seisakusho Co., Ltd.) was soaked in an aqueous 5% sodium hydroxide solution heated to 40°C for 3 minutes, and thus etched, thereafter sodium hydroxide attached to the lens was sufficiently washed out with water, and the substrate was dried by hot air at 50°C. A surface of the plastic lens substrate thus pre-treated was coated with the primer liquid according to a dipping method, thereby forming a coating film, and thus a plastic lens substrate made of a polycarbonate resin and provided with a primer layer was obtained.

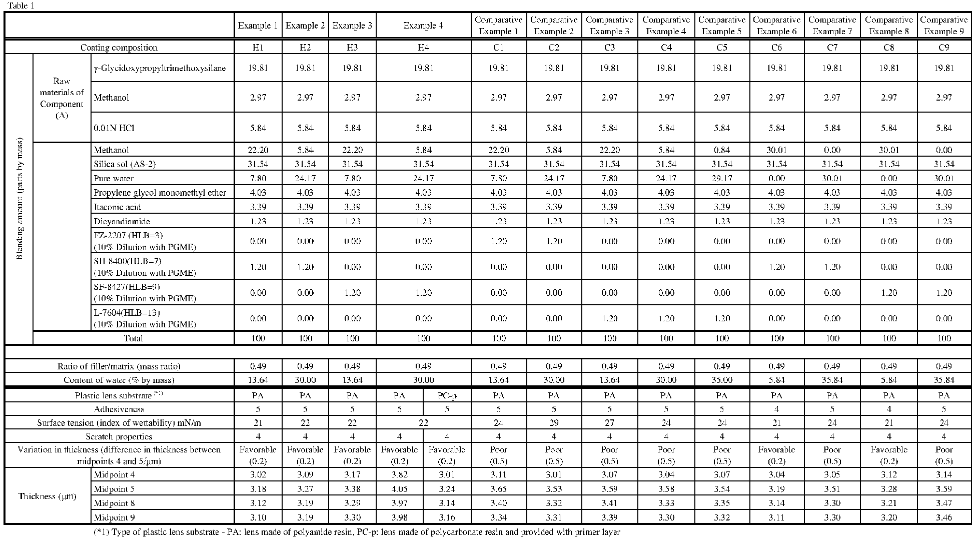

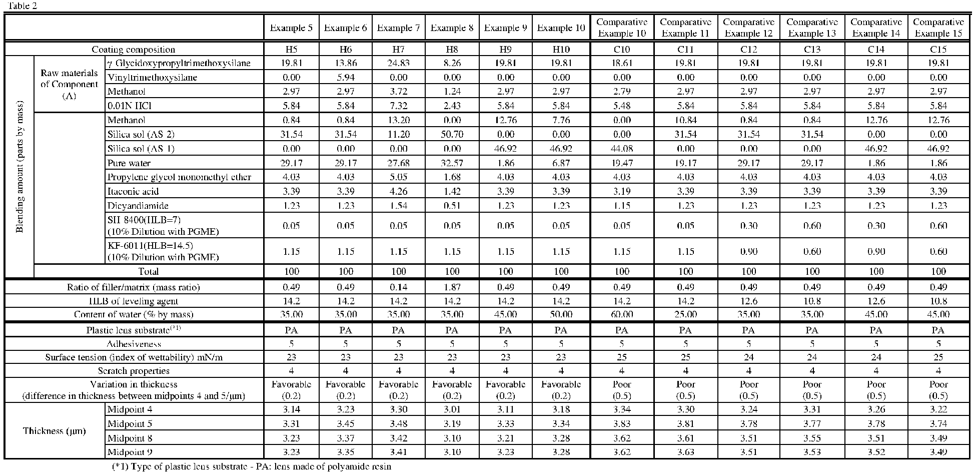

### (Evaluation results of coating film)

Each of the coating compositions of Examples 1 to 4 was low in surface tension and highly wettable to the lens substrate made of a polyamide resin. A coating film formed from such a coating composition not only exhibited high adhesiveness to the lens substrate made of a polyamide resin, but also was small in variation in thickness. Furthermore, the coating film was excellent in scratch resistance.

The coating composition of Example 4 was also highly wettable to the lens substrate made of a polycarbonate resin and the lens substrate made of a polycarbonate resin with a primer layer, and a coating film formed from the coating composition not only exhibited high adhesiveness to such substrates, but also was small in variation in thickness. Furthermore, the coating film was excellent in scratch resistance.

Each of the coating compositions of Examples 5 to 10 was also low in surface tension and highly wettable to the lens substrate made of a polyamide resin. A coating film formed from such a coating composition not only exhibited high adhesiveness to the lens substrate made of a polyamide resin, but also was small in variation in thickness. Furthermore, the coating film was excellent in scratch resistance.

In contrast, a coating film formed from each of the coating compositions of Comparative Examples 1, 2, 3, 4, 5, 7 and 9 was large in variation in thickness. The reason for this was considered because such coating compositions were high in surface tension and low in wettability to the lens substrate made of a polyamide resin.

A coating film formed from each of the coating compositions of Comparative Examples 6 and 8 was inferior in adhesiveness to the lens substrate made of a polyamide resin. The reason for this was considered because such coating compositions were low in the proportion of water and high in the proportion of an alcohol in the solvent and thus caused damage to the lens substrate made of a polyamide resin.

A coating film formed from each of the coating compositions of Comparative Examples 10 to 15 was also large in variation in thickness. The reason for this was considered because such coating compositions were high in surface tension and low in wettability to the lens substrate made of a polyamide resin.

### Reference Signs List

- 1: upper portion
- 2: lower portion
- 3: center
- 4: midpoint between upper portion and center
- 5: midpoint between lower portion and center
- 6: left portion
- 7: right portion
- 8: midpoint between left portion and center
- 9: midpoint between right portion and center
- 10: plastic lens substrate

## Claims

1. A coating composition for forming a hardcoat layer for a plastic substrate,
the coating composition comprising:
(A) at least one component selected from the group consisting of an organosilicon compound represented by the following general formula (I), a hydrolysate thereof, and a partial condensate of the hydrolysate:
R¹R²ₐSi(OR³)₃₋ₐ ... (I)
wherein R¹ represents an organic group having a vinyl group, an epoxy group or a methacryloxy group,
R² represents a hydrocarbon group having 1 to 4 carbon atoms,
R³ represents a hydrocarbon group having 1 to 8 carbon atoms,
an alkoxyalkyl group having 8 or less carbon atoms, or an acyl group having 8 or less carbon atoms, and
a represents 0 or 1;
(B) silica-based fine particles, wherein the average particle size of the silica-based fine particles is in the range from 3 to 60 nm, as measured by a dynamic light scattering method under conditions described herein;
(C) a curing agent comprising a cyanamide derivative compound and at least one selected from the group consisting of a polycarboxylic acid and a polycarboxylic anhydride;
(D) a leveling agent; and
(E) a solvent comprising water and an organic solvent; and
the coating composition satisfying the following requirement (1) or (2):
requirement (1):
a content of the water is 10 to 30% by mass, and
the leveling agent (D) is a leveling agent (D1) having an HLB of 5 to 9;
requirement (2):
a content of the water is 31 to 50% by mass, and
the leveling agent (D) is a leveling agent (D2) which is a leveling agent having an HLB of 13.0 to 16.0 and which comprises a leveling agent component (d21) having an HLB of 5.0 to 9.0 and a leveling agent component (d22) having an HLB of 13.0 to 16.0, wherein the HLB values are calculated according to the Griffin method, and wherein the HLB value of the leveling agent (D) is the sum of the products of the weight fractions and the HLB values of the leveling agent components.

2. The coating composition for forming a hardcoat layer for a plastic substrate according to claim 1, wherein the coating composition satisfies the requirement (1).

3. The coating composition for forming a hardcoat layer for a plastic substrate according to claim 1, wherein the coating composition satisfies the requirement (2).

4. The coating composition for forming a hardcoat layer for a plastic substrate according to any one of claims 1 to 3, having a surface tension of 23 mN/m or less as determined in accordance with the method described in the experimental section.

5. The coating composition for forming a hardcoat layer for a plastic substrate according to any one of claims 1 to 4, wherein the plastic substrate is a polyamide resin substrate.

6. An optical component comprising a plastic substrate and a hardcoat layer comprising a cured product of the coating composition according to any one of claims 1 to 5 provided on the substrate.

7. The optical component according to claim 6, further comprising an antireflective film on a surface of the hardcoat layer opposite to the plastic substrate side.

8. The optical component according to claim 6 or 7, further comprising a primer layer comprising a polyurethane resin as a main component, between the plastic substrate and the hardcoat layer.

9. The optical component according to claim 6 or 7, comprising no primer layer between the plastic substrate and the hardcoat layer.

10. The optical component according to any one of claims 6 to 9, wherein the plastic substrate is a polyamide resin substrate.

## Patentansprüche

1. Beschichtungszusammensetzung zur Herstellung einer Hartschicht für ein Kunststoffsubstrat,
wobei die Beschichtungszusammensetzung umfasst:
(A) mindestens eine Komponente, die ausgewählt ist aus der Gruppe bestehend aus einer Organosiliciumverbindung, dargestellt durch die folgende allgemeine Formel (I), einem Hydrolysat davon und einem Teilkondensat des Hydrolysats:
R¹R²ₐSi(OR³)₃₋ₐ ... (I)
wobei R¹ eine organische Gruppe mit einer Vinylgruppe, einer Epoxygruppe oder einer Methacryloxygruppe darstellt,
R² eine Kohlenwasserstoffgruppe mit 1 bis 4 Kohlenstoffatomen darstellt,
R³ eine Kohlenwasserstoffgruppe mit 1 bis 8 Kohlenstoffatomen, eine Alkoxyalkylgruppe mit 8 oder weniger Kohlenstoffatomen oder eine Acylgruppe mit 8 oder weniger Kohlenstoffatomen darstellt, und
a 0 oder 1 darstellt;
(B) silicabasierte Feinpartikel, wobei die mittlere Teilchengröße der silicabasierten Feinpartikel in dem Bereich von 3 bis 60 nm liegt, gemessen durch ein dynamisches Lichtstreuverfahren unter den hierin beschriebenen Bedingungen;
(C) ein Härtungsmittel, das eine Cyanamidderivatverbindung und mindestens eines ausgewählt aus der Gruppe bestehend aus einer Polycarbonsäure und einem Polycarbonsäureanhydrid umfasst;
(D) ein Verlaufsmittel; und
(E) ein Lösungsmittel, das Wasser und ein organisches Lösungsmittel umfasst; und
wobei die Beschichtungszusammensetzung die folgende Anforderung (1) oder (2) erfüllt: Anforderung (1):
ein Gehalt des Wassers beträgt 10 bis 30 Massen-%, und
das Verlaufsmittel (D) ist ein Verlaufsmittel (D1) mit einem HLB-Wert von 5 bis 9; Anforderung (2):
ein Gehalt beträgt des Wassers 31 bis 50 Massen-%, und
das Verlaufsmittel (D) ist ein Verlaufsmittel (D2), das ein Verlaufsmittel mit einem HLB-Wert von 13,0 bis 16,0 ist und das eine Verlaufsmittelkomponente (d21) mit einem HLB-Wert von 5,0 bis 9,0 und eine Verlaufsmittelkomponente (d22) mit einem HLB-Wert von 13,0 bis 16,0 umfasst, wobei die HLB-Werte nach dem Griffin-Verfahren berechnet werden, und wobei der HLB-Wert des Verlaufsmittels (D) die Summe der Produkte der Gewichtsanteile und der HLB-Werte der Verlaufsmittelkomponenten ist.

2. Beschichtungszusammensetzung zur Herstellung einer Hartschicht für ein Kunststoffsubstrat nach Anspruch 1, wobei die Beschichtungszusammensetzung die Anforderung (1) erfüllt.

3. Beschichtungszusammensetzung zur Herstellung einer Hartschicht für ein Kunststoffsubstrat nach Anspruch 1, wobei die Beschichtungszusammensetzung die Anforderung (2) erfüllt.

4. Beschichtungszusammensetzung zur Herstellung einer Hartschicht für ein Kunststoffsubstrat nach einem der Ansprüche 1 bis 3, mit einer Oberflächenspannung von 23 mN/m oder weniger, bestimmt gemäß dem in dem experimentellen Teil beschriebenen Verfahren.

5. Beschichtungszusammensetzung zur Herstellung einer Hartschicht für ein Kunststoffsubstrat nach einem der Ansprüche 1 bis 4, wobei das Kunststoffsubstrat ein Polyamidharzsubstrat ist.

6. Optische Komponente, umfassend ein Kunststoffsubstrat und eine auf dem Substrat bereitgestellte Hartschicht, umfassend ein Härtungsprodukt der Beschichtungszusammensetzung nach einem der Ansprüche 1 bis 5.

7. Optische Komponente nach Anspruch 6, weiter umfassend einen Antireflexfilm auf einer Oberfläche der Hartschicht, die der Seite des Kunststoffsubstrats gegenüberliegt.

8. Optische Komponente nach Anspruch 6 oder 7, weiter umfassend eine Primerschicht, die ein Polyurethanharz als Hauptkomponente umfasst, zwischen dem Kunststoffsubstrat und der Hartschicht.

9. Optische Komponente nach Anspruch 6 oder 7, keine Primerschicht zwischen dem Kunststoffsubstrat und der Hartschicht umfassend.

10. Optische Komponente nach einem der Ansprüche 6 bis 9, wobei das Kunststoffsubstrat ein Polyamidharzsubstrat ist.

## Revendications

1. Composition de revêtement pour former une couche de revêtement dur pour un substrat en matière plastique,
la composition de revêtement comprenant :
(A) au moins un composant choisi dans le groupe constitué par un composé organosilicié représenté par la formule générale (I) qui suit, un hydrolysat de celui-ci et un condensat partiel de l'hydrolysat :
R¹R²ₐSi(OR³)₃₋ₐ ... (1)
dans laquelle R¹ représente un groupe organique ayant un groupe vinyle, un groupe époxy ou un groupe méthacryloxy,
R² représente un groupe hydrocarboné ayant 1 à 4 atomes de carbone,
R³ représente un groupe hydrocarboné ayant 1 à 8 atomes de carbone, un groupe alcoxyalkyle ayant 8 atomes de carbone ou moins, ou un groupe acyle ayant 8 atomes de carbone ou moins, et
a représente 0 ou 1 ;
(B) des particules fines à base de silice, dans lesquelles la taille moyenne de particules des particules fines à base de silice est situé dans la plage allant de 3 à 60 nm, telle que mesurée par une méthode de diffusion dynamique de la lumière dans des conditions décrites dans les présentes ;
(C) un agent de durcissement comprenant un composé dérivé de cyanamide et au moins un choisi dans le groupe constitué par un acide polycarboxylique et un anhydride d'acide polycarboxylique ;
(D) un agent de nivellement ; et
(E) un solvant comprenant de l'eau et un solvant organique ; et
la composition de revêtement satisfaisant à la condition (1) ou (2) suivante :
condition (1) :
une teneur en eau est de 10 à 30 % en masse, et
l'agent de nivellement (D) est un agent de nivellement (D1) ayant un HLB de 5 à 9 ;
condition (2) :
une teneur en eau est de 31 à 50 % en masse, et
l'agent de nivellement (D) est un agent de nivellement (D2) qui est un agent de nivellement ayant un HLB de 13,0 à 16,0 et qui comprend un composant d'agent de nivellement (d21) ayant un HLB de 5,0 à 9,0 et un composant d'agent de nivellement (d22) ayant un HLB de 13,0 à 16,0, dans lequel les valeurs HLB sont calculées selon la méthode de Griffin, et dans lequel la valeur HLB de l'agent de nivellement (D) est la somme des produits des fractions massiques et des valeurs HLB des composants d'agent de nivellement.

2. Composition de revêtement pour former une couche de revêtement dur pour un substrat en matière plastique selon la revendication 1, dans laquelle la composition de revêtement satisfait à la condition (1).

3. Composition de revêtement pour former une couche de revêtement dur pour un substrat en matière plastique selon la revendication 1, dans laquelle la composition de revêtement satisfait à la condition (2).

4. Composition de revêtement pour former une couche de revêtement dur pour un substrat en matière plastique selon l'une quelconque des revendications 1 à 3, ayant une tension superficielle de 23 mN/m ou moins telle que déterminée conformément au procédé décrit dans la partie expérimentale.

5. Composition de revêtement pour former une couche de revêtement dur pour un substrat en matière plastique selon l'une quelconque des revendications 1 à 4, dans laquelle le substrat en matière plastique est un substrat en résine de polyamide.

6. Composant optique comprenant un substrat en matière plastique et une couche de revêtement dur comprenant un produit durci de la composition de revêtement selon l'une quelconque des revendications 1 à 5, disposée sur le substrat.

7. Composant optique selon la revendication 6, comprenant en outre un film antireflet sur une surface de la couche de revêtement dur opposée au côté substrat en matière plastique.

8. Composant optique selon la revendication 6 ou la revendication 7, comprenant en outre une couche d'apprêt comprenant une résine de polyuréthane en tant que composant principal, entre le substrat en matière plastique et la couche de revêtement dur.

9. Composant optique selon la revendication 6 ou la revendication 7, ne comprenant aucune couche d'apprêt entre le substrat en matière plastique et la couche de revêtement dur.

10. Composant optique selon l'une quelconque des revendications 6 à 9, dans lequel le substrat en matière plastique est un substrat en résine de polyamide.
